# EUROPÄISCHE PATENTSCHRIFT

(11) **EP 2 437 921 B1**
(45) Veröffentlichungstag und Bekanntmachung des Hinweises auf die Patenterteilung: **17.11.2021**
(21) Anmeldenummer: 10742393.1
(22) Anmeldetag: 02.06.2010
(51) Int. Cl.: B29C 44/58, B29C 33/42, B29C 33/56

(54) **VERFAHREN ZUM HERSTELLEN EINES FORMTEILS**
METHOD FOR PRODUCING A MOLDED PART
PROCÉDÉ DE FABRICATION D'UN PIÈCE MOULÉE

(30) Priorität: 03.06.2009 DE 102009023684; 04.03.2010 DE 102010010330
(43) Veröffentlichungstag der Anmeldung: 11.04.2012
(60) Teilanmeldung: 15000290.5
(73) Patentinhaber: Wiesmayer, Otto, 93333 Neustadt/Donau (DE)
(72) Erfinder: Wiesmayer, Otto, 93333 Neustadt/Donau (DE)
(74) Vertreter: Farago-Schauer, Peter Andreas
(86) Internationale Anmeldenummer: PCT/DE2010/000613
(87) Internationale Veröffentlichungsnummer: WO 2010/139307

(56) Entgegenhaltungen:
- EP-A1- 1 190 828
- EP-A2- 1 995 030
- DE-A1-102007 022 327
- GB-A- 1 414 465

## Beschreibung

Die Erfindung betrifft einen Formeinsatz für eine Formteilform, insbesondere eine Schaum- oder Galvanoform, mit einem Oberteil und einem diesem zugeordneten Unterteil, mit einer Kavität, insbesondere einem Gesenk, wobei die Formteilform einem in die die Kavität eingebrachten Material, insbesondere einem Schaum, eine Form aufprägt. Zudem betrifft die Erfindung ein Verfahren zum Herstellen eines Formteils und ein Formteil.

Zum Herstellen von Schaumformteilen aus Schaumsystemen wie zum Beispiel Weich-, Halbhart-, Hart- und Integralschaum werden üblicherweise Schäumformen verwendet, welche, je nach Verwendungszweck und benötigter Ausprägung beziehungsweise Standzeit, aus verschiedenen Basismaterialien hergestellt sind. So kommen zum Beispiel für Prototypen- oder Vorserienformen Kunststoff, Kunststoffgießharze oder Kunststoffplatten zum Einsatz, während für Serienzwecke beziehungsweise zur Ausbringung hoher Stückzahlen und komplexer Teile, Formen aus Aluminium und/oder Stahl verwendet werden.

Diese Formen bestehen meist aus einer Unter- und Oberschale, die mit seitlichen Scharnieren verbunden sind. Geschlossen bilden die beiden "Hälften" einen gewünschten Hohlraum, welcher auch Kavität genannt wird und der das benötigte Formteil bildet.

Zum Entformen von "Hinterschnitten", Rippen oder Ähnlichem werden Schieber und Einsätze oder Ähnliches verwendet, welche manuell, halbautomatisch und auch vollautomatisch eingelegt und betätigt werden. In die Kavität wird bei geöffneter Form und/oder bei geschlossener Form durch ein Angusssystem über einen Mischkopf ein aufbereitetes Schaumsystem eingebracht.

Eine negative beziehungsweise unerwünschte Eigenschaft der vorgenannten Systeme ist, dass der Schaum an dem Aluminium oder dem Stahl der Schäumformen haftet und sich häufig nur mechanisch wieder entfernen lässt.

Um die Teile bei der Entformung nicht zu beschädigen beziehungsweise sie unversehrt entnehmen zu können, kommen diverse Trennmittel zum Einsatz. Diese Trennmittel verhindern ein "Verkleben" der Schaumteile mit der Oberfläche der Formen. Meist kommen Trennmittel auf Wachsbasis zum Einsatz, welche durch Lösungsmittel verflüssigt werden, um diese mittels Sprühpistole oder Pinsel auf die Formen aufzubringen.

Diese Trennmittel müssen vor jedem Zyklus aufgebracht werden. Dabei verflüchtigt sich das Lösungsmittel und das Wachs hinterlässt eine relativ dünne Schicht an der Oberfläche der Formen.

Dies ist ein eigenständiger Prozess, welcher auch stabil sein muss, damit eine gleichbleibende Qualität der Teile gewährleistet werden kann. Die Trennmittel werden üblicherweise manuell durch einen Arbeiter an der Schäumanlage per Spritzpistole eingebracht und die entstehenden Sprühnebel und Lösungsmitteldämpfe müssen abgesaugt werden.

Durch die sich immer wiederholende Einbringung der Trennschicht bildet sich insbesondere an kleinen Radien oder den Rippen eine dicker werdende Wachsschicht, welche regelmäßig entfernt werden muss.

Das Einbringen der Trennschicht, sowie das regelmäßige Entfernen der Wachsrückstände bedeutet einen erheblichen Zeit- und Kostenaufwand, welcher mit einer immer wiederkehrenden Unterbrechung des Produktionsprozesses verbunden ist.

Auf den Schaumteilen selbst verbleibt ebenfalls eine dünne Trennmittelschicht. Diese Schicht ist nur dann unproblematisch, wenn das Teil nicht weiter bearbeitet werden soll, es sich also um ein Fertigteil handelt.

Sollten die Schaumteile jedoch anschließend kaschiert werden, erschwert diese Schicht aus Trennmittelrückständen ein Verkleben des Schaumes mit dem kaschierenden Material. Kaschieren erfolgt beispielsweise mit einem Leder oder einer Folie. Somit muss das Schaumteil vor dem Kaschieren gereinigt werden.

Die beschriebenen Trennmittel werden ebenfalls bei dem Herstellen von Sprühhäuten oder tiefgezogenen Folien eingesetzt. Für das Herstellen von Sprühhäuten und tiefgezogenen Folien kommen häufig sogenannte Galvanoformen zum Einsatz. Mittels dieser Galvanoformen werden beispielsweise Oberflächen für Türverkleidungen, Schalttafeln oder Mittelkonsolen hergestellt.

Auf diese Galvanoformen werden beispielsweise zweikomponentige Polyurethansysteme gesprüht. Dabei bildet sich eine Haut, deren Dicke je nach Eintragungsmenge variiert und nach entsprechender Reaktionszeit der Form entnommen wird. Um die entstandene Haut entformen beziehungsweise entnehmen zu können, müssen, wie bereits oben erläutert, Trennmittel zum Einsatz kommen, welche entweder manuell oder robottorisch eingebracht werden.

Die so hergestellten Sprühhäute werden häufig mit einem Träger unterschäumt, sodass sich komplexere Bauteile ergeben. Auch hierzu muss gewährleistet sein, dass die Sprühhaut von etwaigen Trennmitteln befreit ist.

Weiterhin ist nachteilig, dass Galvanoformen sehr teuer in der Herstellung sind. Dies liegt unter Anderem daran, dass diesen Formen oft eine Oberflächennarbung aufgeprägt ist, welche beispielsweise der herzustellenden Haut eine lederartig genarbte Oberfläche aufprägen soll. Schon kleinste Berührungen durch einen Arbeiter können eine solche Galvanoform zerstören.

Weiterhin werden Formschaumteile häufig mit sogenannten Coatings überzogen. Bei einem solchen Coating handelt es sich um eine Schutzschicht. Ohne diese Schutzschicht neigen die Oberflächen von Schaumformteilen bei Einwirkung von UV-Licht zum Verblassen und Verspröden. Die Schutzschicht verhindert das Einwirken des UV-Lichts beispielsweise durch Absorption der UV-Strahlung.

Coatings sind beispielsweise Lacke, welche vor den Schäumprozessen in die Schaumformen eingebracht werden, um sich dann homogen mit dem Schaum zu verbinden. Nach einem Entformen ist der Schaum dann praktisch mit dem "Coat" überzogen. Die Ausschussrate bei mit Coating überzogenen Formschaumteilen ist relativ hoch und kann bis zu 30 % oder mehr betragen. Zum sauberen Entformen müssen ebenfalls Trennmittel eingesetzt werden.

Bei dem Herstellen von Teppichen, wie sie beispielsweise im Fahrzeugbau zum Einsatz kommen, wird die Rückseite des Teppichs - meist ein thermisch vorgeformter Teppich - mit einer relativ dünnwandigen Schaumschicht versehen. Ziel dieser Maßnahme ist es, den Trittkomkomfort zu erhöhen, Toleranzen aufzufangen, Ausfransungen zu verhindern und eine Geräuschdämmung zu erreichen. Um diese großflächige Schaumhaut nach der Reaktionszeit dem Werkzeug entnehmen zu können, wird meist eine dünnwandige Folie, welche zuvor thermoverformt wurde, als Trennmedium auf die entsprechende Werkzeugseite eingelegt und nach dem Abziehen entsorgt. Dieser Prozess ist arbeits- und kostenintensiv.

GB 1 414 465 A offenbart ein Verfahren gemäß dem Oberbegriff des Anspruchs 1.

Aufgabe der Erfindung ist es, den Stand der Technik zu verbessern.

Die Aufgabe wird gelöst durch ein Verfahren zum Herstellen eines Formteils, insbesondere eines Schaumformteils, wobei das Verfahren folgende Schritte aufweist:
-- Einbringen eines Formeinsatzes in die Schaum- oder Galvanoform einer Vorrichtung zum Herstellen eines Formteils,
-- und zwar ein Formeinsatz Für eine Schaum- oder Galvanoform, mit einem Oberteil und einem diesem zugeordneten Unterteil, mit einer Kavität,
-- wobei die Formteilform einem in die Kavität eingebrachten Schaum eine Form aufprägt,
-- wobei der Formeinsatz flächig an der Formteilform angeordnet ist, so dass Zustand eine volumenverringerte Kavität gebildet ist und der Formeinsatz zum Formaufprägen des Materials beiträgt, wobei der Formeinsatz ein Temperaturleitelement aus Metall aufweist,
-- wobei die der volumenverringerten Kavität zugeordnete Oberfläche des Formeinsatzes durch Polyethylen gebildet ist und
-- Einbringen eines weiteren Formeinsatzes in die Formteilform, wobei dem Oberteil und dem Unterteil der Schaum oder Galvanoform jeweils ein Formeinsatz zugeordnet ist, Einspritzen eines formbaren Materials, insbesondere eines Schaumes, in die volumenverringerte Kavität, sodass die volumen- verringerte Kavität dem Material die Form des Formteils aufprägt, sodass ein Formteil entsteht,
-- Entnehmen des Formteils
-- Entfernen des Formteils
-- eine Materialdicke des jeweiligen Formeinsatzes zwischen 0,8 mm und 8 mm beträgt.
- Ein gebrauchter Formeinsatz gereinigt und wiederverwendet wird.

..

Somit kann ein zügiger Austausch einer formgebenden Kavität gewährleistet werden.

Weiterhin kann so die Reaktionszeit durch das Entfernen des Formeinsatzes von der Formteilform unabhängig abgewartet werden, während durch neu eingebrachte Formeinsätze in die Formteilform bereits das nächste Schaumteil gefertigt wird.

Folgendes begriffliche sei erläutert:

Die "Formteilform" ist eine üblich gefertigte Formteilform beispielsweise aus Aluminium oder Stahl, welche gewöhnlicherweise zum Herstellen eines Formteils verwendet wird. Insbesondere umfasst die Formteilform eine "Schaumform" mit einem Oberteil und einem diesem zugeordneten Unterteil. Dabei können Ober- und Unterteil voneinander separiert werden, um ein Formteil zu entnehmen. Zudem können im geschlossenen Zustand der Schaumform Schäume eingespritzt werden, welche die durch das Oberteil und Unterteil gebildete Form nachbilden, wodurch sich das Schaumformteil bildet.

Weiterhin kann die Formteilform als Galvanoform ausgestaltet sein. Die Galvanoform kann ebenfalls ein Oberteil und ein diesem zugeordnetes Unterteil aufweisen, wobei üblicherweise lediglich ein Oberteil oder ein Unterteil verwendet wird. Mit Galvanoformen können dünnflächige Gebilde wie beispielsweise Häute hergestellt werden. Besonders hochwertige Häute werden dadurch erzeugt, dass die Galvanoform angeätzt wird, sodass diese eine sogenannte Vernarbung aufweist. Somit können Häute erzeugt werden, welche beispielsweise eine lederartige Oberflächenstruktur aufweisen.

Der "Formeinsatz" kann die Formteilform vollständig ausfüllen oder nur Teile der Formteilform bedecken. Letztendlich kann der Formeinsatz eine Platte oder sonstiger körperlicher Gegenstand sein, welcher mit dem Formteil zusammen entformt wird.

Die "Kavität" ist ein Hohlraum, welcher durch die Formteilform gebildet wird. Bei einer einteiligen Formteilform wird in diesem Zusammenhang insbesondere von dem "Gesenk" gesprochen. Der Kavität und dem Gesenk ist gemein, dass beim Einbringen eines Materials, wie beispielsweise eines Schaumes, die Form der Kavität oder des Gesenks durch das Material nachgebildet wird.

Das "eingebrachte Material" ist insbesondere ein flüssiges oder aufgeschäumtes Material, welches durch einen Aushärtungsprozess einen festen Körper bildet. So kann das Material beispielsweise ein Kunststoffschaum sein, insbesondere ein Weich-, Halbhart-, Hart- und/oder Integralschaum. Zudem können Epoxidharze als eingebrachtes Material verwendet werden. Ebenfalls können getränkte Fasern wie epoxidharzgetränkte Fasermatten (Prepregs) eingebracht werden, welche in der Kavität aushärten. Ebenfalls umfasst sein können pulverige Materialien wie sie beispielsweise in einem Slush Molding Verfahren zum Einsatz kommen.

"Anordenbar" bedeutet in diesem Zusammenhang insbesondere, dass der Formeinsatz auf die Formteilform angepasst ist, sodass die Formteilform den Formeinsatz aufnimmt und mittels des Formeinsatzes das herzustellende Formteil herstellbar ist. Bevorzugt ist eine formschlüssige Anordnung, sodass die Formteilform gleichförmig auf den Formeinsatz einwirken kann.

Um Formteile trennmittelfrei herzustellen, kann eine den volumenverringernden Kavitäten zugeordneten Oberfläche des Formeinsatzes eine geringe oder keine Grenzflächenspannung aufweisen. Dabei ist die Grenzflächenspannung sowohl vom eingebrachten Material als auch durch das Material der zugeordneten Oberfläche zu bestimmen. Die geringe Grenzoberflächenspannung bezieht sich insbesondere auf die Materialien Stahl und Aluminium, welche die Oberfläche einer üblichen Formteilform bilden.

Da die quantitativen Werte für die Grenzflächenspannung von dem verwendeten System abhängig sind, welches mit der Oberfläche interagiert, ist es ausreichend, dass für das spezielle System die obige Bedingung erfüllt ist. Insbesondere bei dem System "Schaum" ist es wichtig, dass im Fall des ausgehärteten Schaums die Grenzflächenspannung zwischen ausgehärtetem Schaum und der Oberfläche des Formeinsatzes niedriger als bei Aluminium oder Stahl ist.

In der Literatur wird statt von der Grenzflächenspannung häufig auch von einer Oberflächenspannung gesprochen. Diese Begriffe sind im Folgenden synonym zu betrachten.

Da lediglich die Materialeigenschaft der Oberfläche des Formeinsatzes für die Trennmittelfreiheit wesentlich ist, kann die der volumenverringernden Kavität zugeordnete Oberfläche des Formeinsatzes beschichtet sein.

In einer weiteren Ausprägungsform ist die der volumenverringernden Kavität zugeordnete Oberfläche des Formeinsatzes durch einen Kunststoff gebildet. Somit können Materialalternativen zu Aluminium und Stahl bereitgestellt werden.

Geringe Grenzoberflächenspannungen beziehungsweise Grenzflächenspannungen können dadurch erreicht werden, dass die der volumenverringernden Kavität zugeordnete Oberfläche des Formeinsatzes durch ein Polyolefin, insbesondere durch Polyethylen, und/oder durch ein Polyhalogenolefin, insbesondere durch Polytetrafluorethylen, gebildet ist.

Der Formeinsatz weist ein Temperaturleitelement auf, welches aus Metall gefertigt ist. Durch dieses Temperaturleitelement kann der Temperaturgradient von dem Material in den Formeinsatz zur eigentlichen Formteilform, beispielsweise aus Aluminium oder Stahl, vergrößert oder verringert werden. Somit kann sowohl ein Heizen des Materials im Formeinsatz als auch ein effektives Kühlen des Materials im Formeinsatz realisiert werden. Vorzugsweise kommen Metalle mit guten Wärmeleiteigenschaften zum Einsatz, wobei auch andere Wärmeleiter oder Isolatoren eingesetzt werden können.

Um ebenfalls eine gute Temperaturleitfähigkeit des Formeinsatzes zu gewährleisten, kann die Materialdicke des Formeinsatzes zwischen 0,8 mm und 8 mm und besonders bevorzugt etwa 2,5mm betragen. Dabei ist es für die Wärmeleitung besonders vorteilhaft, sehr geringe Materialdicken zu gewährleisten.

In einer weiteren Ausprägungsform ist der Formeinsatz als ein Spritzgussteil gefertigt. Dadurch können Formeinsätze in großen Stückzahlen hergestellt werden, wodurch sich die Kosten erheblich verringern.

Um ein definiertes Befestigen und ein definiertes Lösen des Formeinsatzes in oder von der Formteilform zu gewährleisten, kann der Formeinsatz ein Befestigungselement aufweisen, welches ein lösbar festes Anordnen mit der Formteilform ermöglicht. Insbesondere sind Klemm- oder Schraubvorrichtungen mögliche Ausführungsformen für das Befestigungselement.

Um dem Formeinsatz eine Stabilität aufzuprägen, kann der Formeinsatz eine Trägerstruktur ausbilden.

Um Gewicht zu reduzieren oder eine bestimmte Wärmeisolation auszubilden, kann die Trägerstruktur Hohlräume aufweisen.

In einer weiteren Ausprägungsform bilden zusammengefügte Teilformeinsätze den Formeinsatz. Somit können insbesondere großflächige Formteile wie beispielsweise Teppichverkleidungen in Automobilen hergestellt werden.

Um mit den Teilformeinsätzen einen möglichst homogenen Formeinsatz zu bilden, können die Teilformeinsätze Verbindungselemente aufweisen, welche einen stabilen Formeinsatz bilden können. Die Verbindungselemente können dabei beispielsweise eine Art Nut- und Federprinzip ausprägen. Auch Schraubverbindungen mit zugeordneten Gewinden sind realisierbar.

Um eine optimale Verbindung von Formteilform und Formeinsatz zu gewährleisten, kann die volumenverringerte Kavität eine herzustellende Form des Formteils ausprägen, wobei die durch die Formteilform ausgebildete Kavität um die Materialdicken des Formeinsatzes vergrößert ist.

In einer weiteren Ausgestaltung weist die Formteilform eine zugeordnete Aufnahme für das Befestigungselement auf. Somit kann Vorteilhafterweise eine lösbare Verbindung zwischen Formteilform und Formeinsatz gewährleistet werden.

Um Materialalternativen für die Formteilform bereitzustellen, kann die Formteilform aus einem Metall, insbesondere Edelstahl, Stahl, Aluminium und/oder Magnesium, oder einer Metalllegierung gefertigt sein.

Um eine Kavität mit optimaler dreidimensionaler Form auszubilden, kann die Formteilform ein Oberteil und ein Unterteil aufweisen, wobei sowohl im Oberteil als auch im Unterteil oder auch in beiden ein Formeinsatz einbringbar ist.

Um den Formeinsatz mehrfach zu verwenden, können bei dem Verfahren vor einem Entfernen des Formeinsatzes weitere Formteile hergestellt werden.

In einer weiteren Ausprägungsform wird vor dem Einspritzen des formbaren Materials auf dem Formeinsatz eine Coating-Schicht aufgebracht, welche beim Herstellen dem Formteil aufgeprägt wird. Somit liegt ein Formteil vor, welches mit der Coating-Schicht eine feste Verbindung ausbildet. Somit ist das Formteil beispielsweise vor schädlicher UV-Strahlung geschützt.

Um zusammengesetzte Bauteile herzustellen, kann vor dem Einspritzen des Formbaren Materials in die Kavität oder in die volumenverringerte Kavität ein Formteilträger, insbesondere ein Kunststoffträger, eingebracht werden. Dabei ist lediglich darauf zu achten, dass der Formteilträger eine Verbindung zum Material in der Kavität ausbilden kann.

In einer weiteren Ausprägungsform wird nach dem Entfernen des Formteils der Formeinsatz gegen einen weiteren Formeinsatz ausgetauscht. So kann auf einen Austausch der Formteile verzichtet werden und es kommt lediglich die kostengünstigeren Formeinsätze zur Verwendung.

Um die Kosten weiter zu verringern, ist vorgesehen, einen gebrauchten Formeinsatz zu reinigen und wiederzuverwenden.

Mit dem erfindungsgemäßen Verfahren zum Herstellen eines Formteils kann Trennmittel jeglicher Art vermieden werden. Somit können die Kosten für Trennmittel bei dem Herstellen eines Formteils reduziert werden. Trennmittel stellen sämtliche Stoffe, Flüssigkeiten, Pulver oder Dergleichen dar, welche beim Herstellen des Form teils verwendet werden, ohne für die eigentliche Funktion des Formteils notwendig zu sein und lediglich dem besseren Entformen dienen.

Im Weiteren wird die Erfindung anhand von Ausführungsbeispielen näher erläutert.

Dabei zeigt
- Figur 1: eine schematische Darstellung eines Werkzeuges mit separierten Formteilformen und Formeinsätzen zum Herstellen eines Formteils,
- Figur 2a: eine schematische Darstellung eines Schnittes durch ein Werkzeug für ein Schaumformteil mit Kunststoffformteilträger,
- Figur 2b: einen vergrößerten Teilausschnitt der Figur 2a mit einem verfülltem Schaumsystem und einem Coating,
- Figur 3a: eine schematische Darstellung eines Schnittes durch ein Werkzeug für ein Schaumformteil,
- Figur 3b: einen Teilausschnitt des Werkzeuges aus Figur 3a,
- Figur 4a: eine schematische Darstellung eines thermogeformten Teppichs für Fahrzeugböden,
- Figur 4b: eine reduzierte schematische Darstellung eines Schnittes eines Werkzeugs zum Herstellen des thermogeformten Teppichs aus Figur 4a,
- Figur 5: eine schematische Darstellung eines Galvanoformwerkzeugs zum Herstellen von Sprühhäuten,

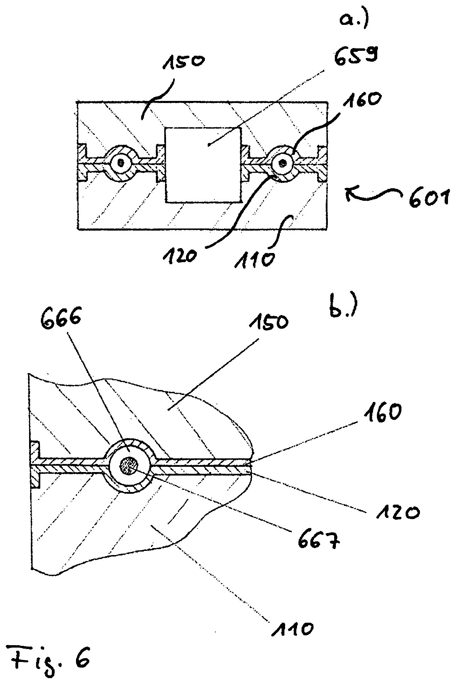

- Figur 6a: eine schematische Darstellung eines Schnittes durch ein Werkzeug zum Herstellen eines Lenkrades und
- Figur 6b: einen vergrößerten Ausschnitt des Werkzeuges aus Figur 6a

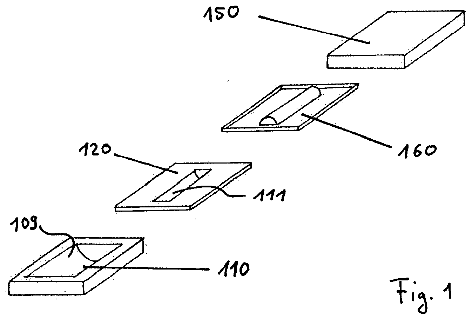

Eine Grundform eines erfindungsgemäßen Werkzeugs (Figur 1) besteht aus einer Formteilform (Unterteil) 110, einem dem Formteilform (Unterteil) 110 zugeordneten Formeinsatz (Unterteil) 120 und einer Formteilform (Oberteil) 150, einem dem Formteilform (Oberteil) 150 zugeordneten Formeinsatz (Oberteil) 160.

Die Formteilform (Unterteil) 110 weist eine Teilkavität 109 auf. Das Gleiche gilt analog für die Formteilform (Oberteil) 150 (nicht dargestellt). Beide Teilkavitäten bilden zusammengefügt eine Kavität. Der Formeinsatz (Unterteil) 120 weist eine volumenverringerte Teilkavität 111 auf. Analoges gilt für den Formeinsatz (Oberteil) 160 (nicht dargestellt). Beide volumenverringerten Teilkavitäten bilden eine volumenverringerte Kavität.

Sowohl die Formteilform (Unterteil) 110 als auch die Formteilform (Oberteil) 150 sind so ausgestaltet, dass die zugeordneten Formeinsätze 120, 160 durch die Formteilformen 150, 110 formschlüssig aufgenommen werden.

Werden Formteilform (Oberteil) 150 und Formteilform (Unterteil) 110 mit den Formeinsätzen 120, 150 zusammengesetzt, bildet sich das Formwerkzeug, welches zum Herstellen eines Formteils verwendet wird.

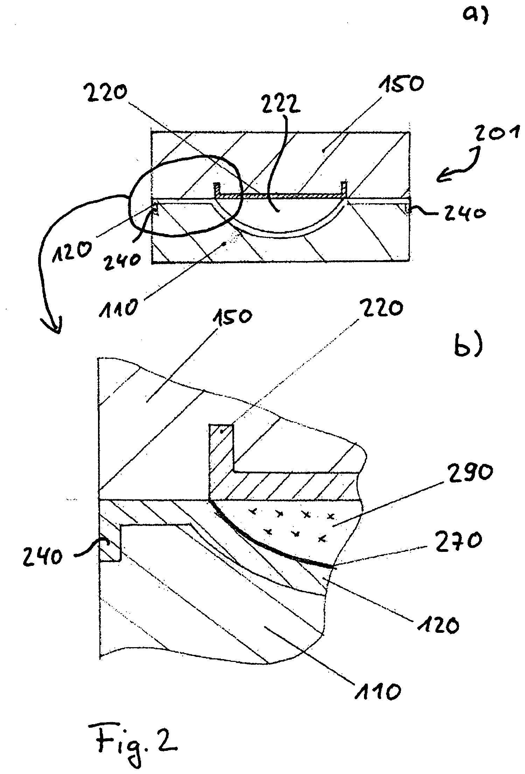

Ein Werkzeug 201 zum Herstellen eines an einem Kunststoffformträger 220 angebrachten Schaumformteils (Fig. 2a) umfasst eine Formteilform (Oberteil) 150 und eine Formteilform (Unterteil) 110. In die Formteilform 110 ist der Formeinsatz 120 eingebracht. Die sich dadurch bildende formschlüssige Verbindung wird durch die Klemmverbindung 240 fixiert. In der Formteilform (Oberteil) 150 ist ein Kunststoffträger 220 angeordnet. An diesem Kunststoffformteilträger 220 wird beim Herstellen das Schaumformteil (nicht dargestellt) angebracht. Das zusammengefügten Werkzeug bildet eine volumenverringerte Kavität 222 aus.

Zum Herstellen eines Bauteils mit Kunststoffträger, Schaumformteil und einem das Schaumformteil bedeckenden Coating 270 wird der Formeinsatz 120 des Werkzeugs 201 mit einem Coatingmaterial bedeckt (siehe Fig. 2b). In der Formteilform 150 wird der Kunststoffformteilträger 220 eingebracht. Formteilform (Oberteil) 150 und Formteilform (Unterteil) 110 mit zugehörigem Formeinsatz 120 werden verschlossen. In die volumenverringerte Kavität 222 wird das Schaumsystem 290 eingebracht. Das Schaumsystem 290 bildet mit dem Coating 270 und dem Kunststoffformteilträger 220 eine feste Verbindung aus. Da der Formeinsatz 120 aus Polyethylen gefertigt ist, bleiben beim Entformen keine oder nur geringe Reste des Coatings 270 an dem Formeinsatz 120 haften.

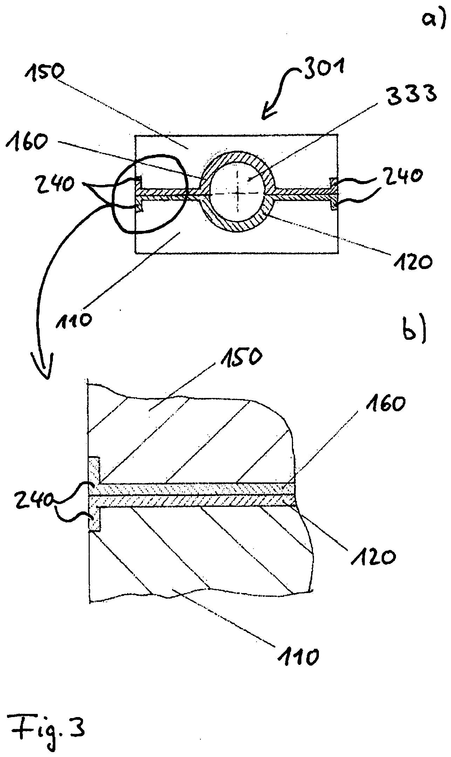

Mit dem Werkzeug 301 wird ein Schaumformteil 333 hergestellt (siehe Fig. 3a und 3b). Sowohl der Formeinsatz (Oberteil) 160 als auch der Formeinsatz (Unterteil) 120 bestehen aus Polyethylen. Die beiden Formeinsätze 120, 160 werden durch die zugehörigen Formteilformen 150 und 110 passgenau aufgenommen. Die Klemmverbindungen 240 sorgen für eine ausreichend feste Verbindung der Formteilformen 150,110 mit den Formeinsätzen 120,160. In die volumenverringerte Kavität 333 wird ein Schaum eingesprüht, sodass sich das Schaumformteil 333 bildet. Durch die Materialauswahl für den Formeinsatz 120, 160 bilden sich keine Rückstände des Schaumformteils an den Formeinsätzen 120, 160.

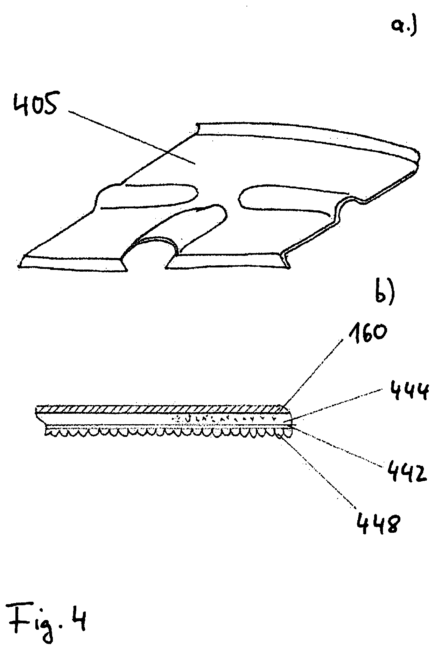

Mit dem Formeinsatz 160 werden thermogeformte Teppiche 405 für Fahrzeugböden hergestellt (siehe Fig. 4b). Dazu wird ein Werkzeug verwendet, wie es in Figur 4b reduziert dargestellt ist. Ein Teppich für Fahrzeugböden weist im Prinzip drei Schichten auf. Zum Einen einen Schaumrücken 444, einen diesem Schaumrücken 444 zugeordneten Teppichträgergewirke 442 und die Schlingenware 448, welche für den Benutzer die eigentliche Teppichoberfläche bildet. Vorliegend besteht die Schlingware 448 aus Velours. Die an der Schlingenware 448 ansetzende Formteilform ist nicht dargestellt. Diese Formteilform begrenzt jedoch die Ausdehnungsmöglichkeiten des Teppichträgergewirkes 442 und der Schlingenware 448. Die für den Schaumrücken 444 benötigte Kavität wird durch den Formeinsatz (Unterteil) 160 gebildet. Diese ist aus Polyethylen gefertigt.

In die Kavität wird ein Schaum eingebracht, sodass sich ein Schaumrücken 444 ausbildet, der eine feste Verbindung mit dem Teppichträgergewirke 442 ausbildet. Durch die Materialauswahl des Formeinsatzes (Unterteil) 160 verbleiben kleine Reste des Schaumrückens 444 am Formeinsatz (Unterteil) 160, sodass der thermogeformte Teppich 405 für Fahrzeugböden im Wesentlichen trennmittelfrei herstellbar ist.

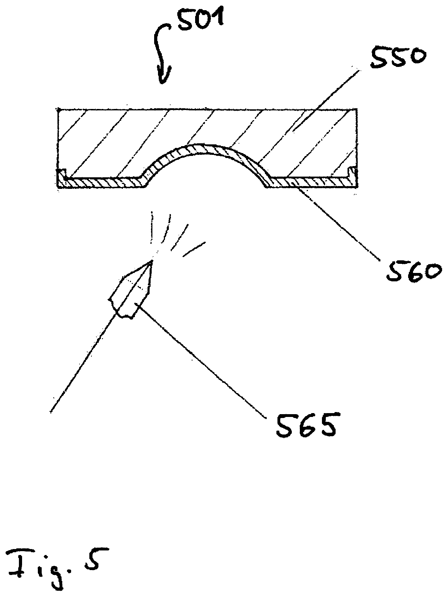

Mit dem Werkzeug 501 werden Sprühhäute hergestellt (siehe Fig. 5). Das Werkzeug besteht aus einer Galvanoformteilform (Oberteil) 550 und einem diesem zugeordneten Galvanoformeinsatz (Oberteil) 560. Der Galvanoformeinsatz (Oberteil) 560 wird durch eine Spritzdüse 565 mit einem Zweikomponentenpolyurethansystem besprüht. Der aus Polyethylen bestehende Galvanoformeinsatz (Oberteil) 560 weist eine Vernarbung auf, welche einer aufgesprühten Haut eine lederartige Strukturierung aufprägt.

Die Spritzdüse 565 verteilt das Polyurethansystem so, dass sich im Laufe der Zeit eine dünne Haut auf der Oberfläche des Galvanoformeinsatzes (Oberteil) 560 ausbildet. Beim Entformen wird diese Haut von dem Galvanoformeinsatz (Oberteil) 560 abgezogen. Durch die Materialauswahl für den Galvanoformeinsatz (Oberteil) 560 verbleiben keine Rückstände der hergestellten Haut an dem Galvanoformeinsatz.

Mit dem Werkzeug 601 wird ein Lenkrad hergestellt. Das Werkzeug 601 weist eine Formteilform (Oberteil) 110 und eine Formteilform (Unterteil) 150 auf. Diese Formteilformen 110, 150 nehmen jeweils einen Formeinsatz 120, 160 auf. Zusätzlich weist das Werkzeug 601 einen Freiraum für die Lenkradnabe 659 auf. Zur Stabilität ist vor dem Einschäumen ein Lenkradkern 667 in dem Werkzeug 601 angebracht. In die sich ausbildende volumenverringerte Kavität 666 wird das Schaumsystem eingesprüht, sodass sich das Lenkrad ausbildet.

### Bezugszeichenliste

- 109: Teilkavität
- 110: Formteil vorn (Unterteil)
- 111: Volumenverringerte Teilkavität
- 120: Formeinsatz (Unterteil)
- 150: Formteil vorn (Oberteil)
- 160: Formeinsatz (Oberteil)
- 201: Werkzeug zum Herstellen eines an einem Kunststoffformträger angebrachten Schaumformteils
- 220: Kunststoffformteilträger
- 222: Volumenverringerte Kavität
- 240: Klemmverbindung
- 270: Coating
- 290: Schaumsystem
- 301: Werkzeug zum Herstellen eines Schaumformteils
- 333: Schaumformteil
- 405: Thermogeformter Teppich
- 444: Schaumrücken
- 446: Teppichträgergewirke
- 448: Schlingenware (Velours)
- 501: Werkzeug zum Herstellen einer Haut
- 550: Galvanoformteil vorn (Oberteil)
- 560: Galvanoformeinsatz (Oberteil)
- 565: Spritzdüse
- 601: Werkzeug
- 659: Freiraum für Lenkradnabe
- 666: Schaumsystem
- 667: Lenkradkern

## Patentansprüche

1. Verfahren zum trennmittelfreien Herstellen eines Schaumformteils (333), wobei das Verfahren folgende Schritte aufweist:
- Einbringen eines Formeinsatzes (120, 160) in die Schaum- oder Galvanoform einer Vorrichtung zum Herstellen eines Formteils,
- und zwar ein Formeinsatz für eine Schaum- oder Galvanoform, mit einem Oberteil (150) und einem diesem zugeordneten Unterteil (110), mit einer Kavität,
- wobei die Formteilform einem in die Kavität eingebrachten Schaum eine Form aufprägt,
- wobei der Formeinsatz flächig an der Formteilform angeordnet ist, so dass im angeordneten Zustand eine volumenverringerte Kavität (111) gebildet ist und der Formeinsatz zum Formaufprägen des Materials beiträgt,
- wobei die der volumenverringerten Kavität zugeordnete Oberfläche des Formeinsatzes durch Polyethylen gebildet ist und
- Einbringen eines weiteren Formeinsatzes (120, 160) in die Formteilform, wobei dem Oberteil und dem Unterteil der Schaum oder Galvanoform jeweils ein Formeinsatz zugeordnet ist, Einspritzen eines formbaren Materials, insbesondere eines Schaumes, in die volumenverringerte Kavität, sodass die volumen- verringerte Kavität dem Material die Form des Formteils aufprägt, sodass ein Formteil entsteht,
- Entnehmen des Formteils
- Entfernen des Formteils wobei
- ein gebrauchter Formeinsatz gereinigt und wiederverwendet wird, **dadurch gekennzeichnet, dass**
- eine Materialdicke des jeweiligen Formeinsatzes zwischen 0,8 mm und 8 mm beträgt und
- ein Formeinsatz ein Temperaturleitelement aus Metall aufweist.

2. Verfahren nach Anspruch 1, **dadurch gekennzeichnet, dass** vor einem Entfernen des jeweiligen Formeinsatzes weitere Formteile hergestellt werden.

3. Verfahren nach einem der Ansprüche 1 oder 2, **dadurch gekennzeichnet, dass** vor dem Einspritzen des formbaren Materials auf dem jeweiligen Formeinsatz eine Coating-Schicht (270) aufgebracht wird, welche beim Herstellen dem Formteil aufgeprägt wird.

4. Verfahren nach einem der Ansprüche 1 bis 3, **dadurch gekennzeichnet, dass** vor dem Einspritzen des formbaren Materials in die volumenverringerte Kavität ein Formteilträger (220) eingebracht wird.

5. Verfahren nach einem der Ansprüche 1 bis 4, **dadurch gekennzeichnet, dass** nach dem Entfernen des Formteil der jeweilige Formeinsatz gegen einen weiteren Formeinsatz ausgetauscht wird.

6. Verfahren nach einem der Ansprüche 1 bis 5, **dadurch gekennzeichnet**, die der volumenverringerten Kavität zugeordnete Oberfläche des Formeinsatz beschichtet ist.

7. Verfahren nach einem der Ansprüche 1 bis 6, **dadurch gekennzeichnet, dass** die Materialdicke des Formeinsatz 2,5 mm beträgt.

8. Verfahren nach einem der Ansprüche 1 bis 7, **dadurch gekennzeichnet, dass** der jeweilige Formeinsatz als ein Spritzgussteil gefertigt ist.

9. Verfahren nach einem der Ansprüche 1 bis 8, wobei ein Formeinsatz **gekennzeichnet ist durch** ein Befestigungselement, welches ein lösbar festes Anordnen mit der F ermteilform ermöglicht.

10. Verfahren nach einem der Ansprüche 1 bis 9, wobei ein Formeinsatz **gekennzeichnet ist durch** eine Trägerstruktur.

11. Verfahren nach Anspruch 10, **dadurch gekennzeichnet, dass** die Trägerstruktur Hohlräume aufweist.

12. Verfahren nach Anspruch 10, **dadurch gekennzeichnet, dass** die Formteilform eine zugeordnete Aufnahme für das Befestigungselement aufweist.

13. Verfahren nach einem der Ansprüche 1 bis 12, **dadurch gekennzeichnet, dass** die Formteilform aus einem Metall oder einer Metalllegierung gefertigt ist.

## Claims

1. Method of manufacturing a foamed molded part (333) without use of a release agent, the method having the following steps:
- inserting a mold insert (120, 160) into the foam form or electroform of a device for manufacturing a molded part,
- that is, a mold insert for a foam form or electroform, having an upper die (150) and a lower die (110) allocated to the same, with a cavity,
- the molded part form imparting a shape to a foam introduced into the cavity,
- the mold insert being arranged on the molded part form in a planar manner such that in the arranged state, a cavity (111) reduced in volume is formed and the mold insert contributes to shape imparting of the material,
- the surface of the mold insert, which is allocated to the cavity reduced in volume, being formed by polyethylene, and
- introducing an additional mold insert (120, 160) into the molded part form, one mold insert each being allocated to the upper die and the lower die of the foam form or electroform; injecting a moldable material, in particular a foam, into the cavity reduced in volume, such that the cavity reduced in volume imparts the shape of the molded part to the material such that a molded part is produced,
- taking out the molded part,
- removing the molded part,
where
- a used mold insert is cleaned and reused,
**characterized in that**
- a material thickness of the respective mold insert is between 0.8 mm and 8 mm, and
- a mold insert has a temperature conducting element made of metal.

2. Method according to Claim 1, **characterized in that** before removal of the respective mold insert, additional molded parts are manufactured.

3. Method according to one of Claims 1 or 2, **characterized in that** before injection of the moldable material onto the respective mold insert, a coating layer (270) is applied which is imprinted onto the molded part during manufacturing.

4. Method according to one of Claims 1 through 3, **characterized in that** before injection of the moldable material into the cavity with reduced volume, a molded part carrier (220) is introduced.

5. Method according to one of Claims 1 through 4, **characterized in that** after removal of the molded part, the respective mold insert is replaced by another mold insert.

6. Method according to one of Claims 1 through 5, **characterized in that** the surface of the mold insert which is allocated to the cavity reduced in volume is coated.

7. Method according to one of Claims 1 through 6, **characterized in that** the material thickness of the mold insert is 2.5 mm.

8. Method according to one of Claims 1 through 7, **characterized in that** the respective mold insert is manufactured as an injection-molded part.

9. Method according to one of Claims 1 through 8, a mold insert being **characterized by** a fastening element which allows a releasably fixed arrangement with the molded part form.

10. Method according to one of Claims 1 through 9, a mold insert being **characterized by** a carrier structure.

11. Method according to Claim 10, **characterized in that** the carrier structure has hollow spaces.

12. Method according to Claim 10, **characterized in that** the molded part form has an allocated receptacle for the fastening element.

13. Method according to one of Claims 1 through 12, **characterized in that** the molded part form is made of a metal or a metal alloy.

## Revendications

1. Procédé, destiné à fabriquer sans agent séparateur une pièce moulée en mousse (333), le procédé comportant les étapes suivantes, consistant à :
- introduire un insert de moulage (120, 160) dans le moule de moulage de mousse ou d'électroformage d'un dispositif de fabrication d'une pièce moulée,
- à savoir un insert de moulage destiné à un moule de moulage de mousse ou d'électroformage doté d'une face supérieure (150) et d'une face inférieure (110) associée à celle-ci, avec une cavité,
- le moule pour pièce moulée imprimant une forme à une mousse introduite dans la cavité,
- l'insert de moulage étant placé à plat sur le moule pour pièce moulée, de sorte que lorsqu'il est placé, il se créé une cavité (111) réductrice de volume et que l'insert de moulage contribue à imprimer la forme sur la matière,
- la surface d'insert de moulage qui est associée à la cavité réductrice de volume étant formée de polyéthylène et
- introduire un insert de moulage (120, 160) supplémentaire dans le moule pour pièce moulée, à la face supérieure et à la face inférieure du moule de moulage de mousse ou d'électroformage étant associé chaque fois un insert de moulage, injecter une matière façonnable, notamment une mousse dans la cavité réductrice de volume, de sorte que la cavité réductrice de volume imprime à la matière la forme de la pièce moulée, de manière à donner naissance à une pièce moulée
- dégager la pièce moulée
- retirer la pièce moulée
- un insert de moulage usagé étant nettoyé et réutilisé,
**caractérisé**
- **en ce qu'**une épaisseur de matière de l'insert de moulage respectif est de 0,8 mm à 8 mm et
- **en ce qu'**un insert de moulage comporte un élément conducteur thermique en métal.

2. Procédé selon la revendication 1, **caractérisé en ce qu'**avant le retrait de l'insert de moulage respectif, l'on fabrique des pièces moulées supplémentaires.

3. Procédé selon l'une quelconque des revendications 1 ou 2, **caractérisé en ce qu'**avant l'injection de la matière façonnable sur l'insert de moulage respectif, l'on applique une couche de revêtement (270), que l'on estampe lors de la fabrication de la pièce moulée.

4. Procédé selon l'une quelconque des revendications 1 à 3, **caractérisé en ce qu'**avant l'injection de la matière façonnable dans la cavité réductrice de volume, l'on insère un support de pièce moulée (220).

5. Procédé selon l'une quelconque des revendications 1 à 4, **caractérisé en ce qu'** après le retrait de la pièce moulée, l'on remplace l'insert de moulage respectif par un insert de moulage supplémentaire.

6. Procédé selon l'une quelconque des revendications 1 à 5, **caractérisé en ce que** la surface de l'insert de moulage qui est associée à la cavité réductrice de volume est revêtue.

7. Procédé selon l'une quelconque des revendications 1 à 6, **caractérisé en ce que** l'épaisseur de matière de l'insert de moulage est de 2,5 mm.

8. Procédé selon l'une quelconque des revendications 1 à 7, **caractérisé en ce que** l'insert de moulage respectif est fabriqué sous la forme d'une pièce moulée par injection.

9. Procédé selon l'une quelconque des revendications 1 à 8, un insert de moulage étant **caractérisé par** un élément de fixation, lequel permet un placement fixe désolidarisable avec le moule à pièce moulée.

10. Procédé selon l'une quelconque des revendications 1 à 9, un insert de moulage étant **caractérisé par** une structure porteuse.

11. Procédé selon la revendication 10, **caractérisé en ce que** la structure porteuse comporte des espaces creux.

12. Procédé selon la revendication 10, **caractérisé en ce que** le moule à pièce moulée comporte un réceptacle associé pour l'élément de fixation.

13. Procédé selon l'une quelconque des revendications 1 à 12, **caractérisé en ce que** le moule à pièce moulée est fabriqué en un métal ou en un alliage métallique.
